# EUROPÄISCHE PATENTANMELDUNG

(11) **EP 1 258 843 A2**
(43) Veröffentlichungstag der Anmeldung: **20.11.2002**
(21) Anmeldenummer: 02008164.2
(22) Anmeldetag: 15.04.2002
(51) Int. Cl.: G07F 9/06, E05G 1/00

(54) **Verfahren und Vorrichtung zum Öffnen und Schliessen einer Kassette**

(30) Priorität: 14.05.2001 DE 10123383
(71) Anmelder: Giesecke & Devrient GmbH, 81677 München (DE)
(72) Erfinder: Mätzig, Christoph, 84539 München (DE)

(57) **Zusammenfassung**

Die Erfindung betrifft eine Kassette, eine Steuerungseinrichtung, einen Geldautomaten und ein Verfahren zum Öffnen und/ oder Verschließen einer solchen Kassette.

Dadurch, daß die Kassette mittels einer Funkverbindung zwischen der Kassette und einer Steuerungseinrichtung kontaktlos geöffnet und/oder geschlossen werden kann, ist es möglich, die Handhabung von Kassetten wesentlich einfacher und zeiteffektiver zu gestalten.

## Beschreibung

Die Erfindung betrifft ein Verfahren zum Öffnen und/oder Schließen einer Kassette zur Aufnahme von Wertgegenständen, wie z.B. Wertscheinen oder Münzen. Weiterhin betrifft die Erfindung eine Kassette, eine Steuerungseinrichtung und einen Geldautomaten.

Ein solches Verfahren und solche Vorrichtungen sind beispielsweise aus der EP 0 004 436 B1 bekannt. Dieses Dokument beschreibt eine Kassette für Banknoten, die ohne einen Schlüssel oder dergleichen geöffnet und geschlossen werden kann. Hierzu wird die Kassette so in ein Andockgehäuse eingesetzt, daß ein elektrischer Kontakt der Kassette in einen Gegenkontakt des Andockgehäuses einrastet. Über die damit hergestellte elektrische Signalverbindung zwischen Kassette und Andockgehäuse, wird die Kassette mit Hilfe eines in der Kassette enthaltenen elektromechanischen Verschlusses ferngesteuert geöffnet bzw. geschlossen.

Ein weiteres System mit einer ohne Schlüssel zu öffnenden Kassette ist zudem aus US 5,615,625 bekannt. Hiernach wird ebenfalls eine Kassette zum Öffnen und Schließen so in ein Andockgehäuse positioniert, daß eine elektrische Verbindungsleitung zwischen dem Andockgehäuse und einem Solenoidmechanismus in der Kassette hergestellt wird. Dieser Mechanismus ist mit einer motorischen Steuerung in der Kassette verbunden, um sie über die elektrische Verbindungsleitung zwischen Andockgehäuse und Kassette ferngesteuert öffnen und schließen zu können.

Ein Nachteil dieser beiden bekannten Systeme ist es, daß die Kassette mit einer hohen Paßgenauigkeit und nur in einer einzigen Orientierung in das Andockgehäuse eingesetzt werden muß, um die Verbindung zwischen den elektrischen Kontakten von Gehäuse und Kassette schließen zu können.

Ausgehend davon ist es die Aufgabe der vorliegenden Erfindung, ein Verfahren zum Öffnen und/oder Schließen einer Kassette zur Verfügung zu stellen, das einfacher und flexibler handhabbar ist. Eine weitere Aufgabe besteht in der Bereitstellung einer zugehörigen Kassette, einer Steuerungseinrichtung für eine solche Kassette und eines Geldautomaten, der zur Verwendung einer solchen Kassette und einer solchen Steuerungseinrichtung ausgelegt ist.

Diese Aufgabe wird durch das Verfahren nach Anspruch 1, die Kassette nach Anspruch 9, die Steuerungseinrichtung nach Anspruch 13 und den Geldautomaten nach Anspruch 19 gelöst. Die weiteren Ansprüche beschreiben bevorzugte Ausführungsbeispiele.

Die vorliegende Erfindung wurde auf der Grundlage der Erkenntnis weiterentwickelt, daß sich Kassetten auf besonders einfache Weise dadurch öffnen und schließen lassen, daß sie kontaktlos per Funk angesteuert werden.

Dadurch ist die Möglichkeit geschaffen, zum Öffnen und Schließen der Kassetten auf ein Andockgehäuse verzichten zu können, in welches die Kassetten bei den bekannten Systemen erst mit hoher Präzision eingebracht werden müssen, um die elektrische Verbindung zur Übertragung des Öffnungs- bzw. Schließsignals an die Kassette zu schließen.

Da die Ansteuerung erfindungsgemäß kontaktlos per Funk erfolgt, müssen die Kassette und die Steuerungseinrichtung sich zur Ansteuerung der Kassette lediglich in einem Raumbereich befinden, in dem noch eine Funkverbindung zwischen den beiden Komponenten gewährleistet ist. Die Verwendung einer Verbindung per Funk anstelle z. B. einer magnetischen oder elektrischen Ankopplung führt somit zu einem wesentlich einfacheren Öffnen bzw. Schließen der Kassetten.

Z. B. in dem Fall, daß die Kassette in einem Geldautomaten zur Aufnahme bzw. Ausgabe von Banknoten oder Münzen verwendet wird, wird die Steuerungseinrichtung zur Funksteuerung der Kassette bevorzugt fest in dem Geldautomaten installiert sein.

Alternativ ist auch die Verwendung einer mobilen Sendeeinheit als Steuerungseinrichtung beispielsweise dann von Vorteil, wenn in einer Bank oder einem Cash-Center in einem Vorgang nicht nur eine einzelne, sondern mehrere Kassetten geöffnet oder geschlossen werden sollen. Die mobile Sendeeinheit kann in diesem Fall z.B. ein Mobiltelefon oder dergleichen sein, das die Bedienperson mit sich trägt und die Kassetten unabhängig davon ansteuert, in welcher speziellen Position oder Lagerung sie sich befinden.

Die Funkverbindung zwischen der Steuerungseinrichtung und der Kassette wird bevorzugt nach einem standardisiertem System, wie z.B. dem "Bluetooth"-System, ausgelegt sein.

Die Verwendung beispielsweise des "Bluetooth"-Systems erlaubt, neben einer kostengünstigen Herstellung der Vorrichtungsbestandteile, zudem, daß mehrere in einem Raumbereich vorhandene Kassetten nicht nur nacheinander, sondern auch weitgehend gleichzeitig geöffnet werden können. Im Vergleich zu den bekannten Systemen, bei denen eine Kassette nach der anderen in ein zugehöriges Andockgehäuse zur Ansteuerung eingesetzt werden muß, führt dies zu einer wesentlich einfacheren und zeitsparenderen Handhabung von Kassetten.

Besonders bevorzugt wird die Funkverbindung nicht nur zur Steuerung von Öffnungs- bzw. Schließvorgängen, sondern auch zur Übertragung von Daten über die Art und/oder den Inhalt der Kassetten verwendet. Somit kann eine Bedienperson, z.B. zur Wertstellung des Inhalts von mehreren Kassetten in einem Cash-Center, mit Hilfe eines Mobiltelefons, das sie mit sich führt, die Kassetten nicht nur öffnen, sondern die zugehörigen Kassettendaten zur weiteren Verwendung, d.h. z. B. zur Wertstellung der Kassetteninhalte, auch auslesen. Sowohl das Öffnen bzw. Schließen, als auch das Ein. bzw. Auslesen von Kasettendaten kann dabei vorteilhaft auch automatisch erfolgen, ohne das die Bedienperson manuelle Bedienvorgänge am Mobiltelefon ausführen muß.

Gemäß einem weiteren vorteilhaften Ausführungsbeispiel wird zudem der Öffnungs- und/oder Schließvorgang erst dann erfolgen, nachdem sich die Steuerungseinrichtung bzw. die die Steuerungseinrichtung bedienende Bedienperson dazu berechtigt hat, solche Öffnungs- bzw. Schließvorgänge bei der jeweiligen Kassette durchzuführen.

Hierzu können z. B. von der Steuerungseinrichtung, bevorzugt mittels der auch für das Öffnen/ Schließen der Kassette verwendeten Signalverbindung, Daten zur Kassette übertragen werden, um diese Berechtigung zu verifizieren, so daß die Kassette nur nach dieser Verifizierung geöffnet werden kann.

Besonders bevorzugt wird diese Verifizierung allerdings auf einer von der Funkverbindung zwischen Kassette und Steuerungseinrichtung unabhängigen Weise, d.h. über eine andere Funkverbindung oder über eine Nicht-Funkverbindung erfolgen. So kann das Mobiltelefon der Bedienperson, das als Steuerungseinrichtung zum Öffnen und Schließen der Kassetten dient, beispielsweise über eine andere Funk- oder Telefonverbindung mit einer Zentrale verbunden sein, die dem Mobiltelefon in verschlüsselter Weise Daten zusendet, damit dieses die für das Öffnen von bestimmten Kassetten passenden Funksignale erzeugen bzw. weiterleiten kann.

Nachfolgend werden weitere Ausführungsbeispiele der vorliegenden Erfindung anhand der beigefügten Zeichnungen näher erläutert und beschrieben. Dabei zeigt die
Figur 1 eine schematische Querschnittsansicht auf einen Geldautomaten mit Kassette und Steuerungseinrichtung nach einem ersten Ausführungsbeispiel; und die
Figur 2 eine schematische Ansicht auf eine Steuerungseinrichtung und mehrere Kassetten nach einem zweiten Ausführungsbeispiel.

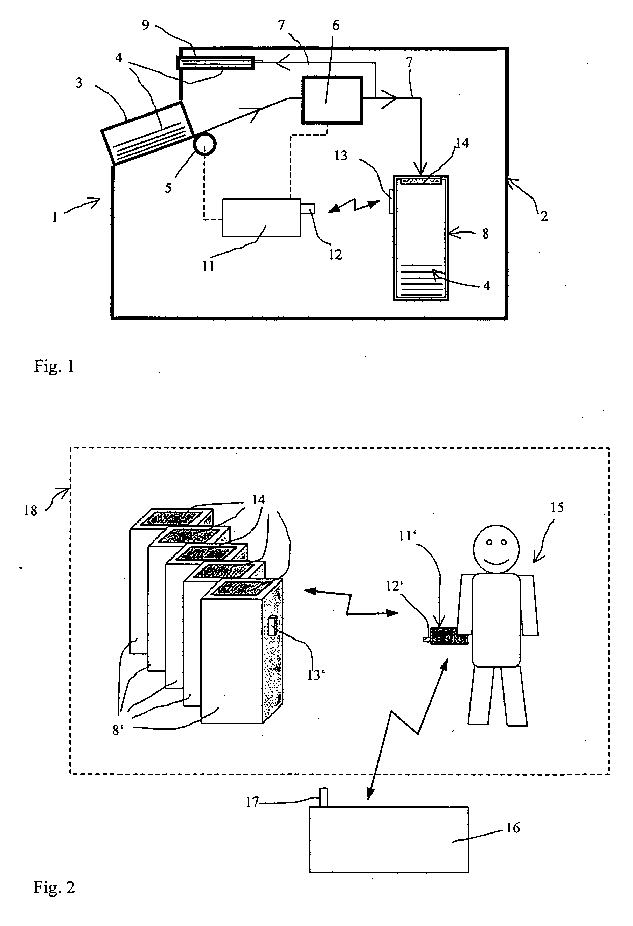

Die Figur 1 zeigt einen Geldautomaten 1 nach einem ersten Ausführungsbeispiel, in den u.a. Banknoten 4 eingezahlt werden können. Dazu sind in dem Gehäuse 2 des Geldautomaten 1 ein Eingabefach 3 zur Eingabe einzuzahlender Banknoten 4, Einzugsrollen 5 zum vereinzelten Einzug von Banknoten 4, eine Prüfeinrichtung 6 zur Überprüfung von physikalischen Eigenschaften der vereinzelten Banknoten 4 und eine Transporteinrichtung 7 zum vereinzelten Transport von Banknoten 4 vom Eingabefach 3 durch die Prüfeinrichtung 6 zur Ablage in einer Endkassette 8 oder zu einem Ausgabefach 9 vorhanden, in das diejenigen Banknoten 4 an den Einzahler zurückgegeben werden, die von der Prüfeinrichtung 6 nicht erkannt wurden und deshalb nicht in der Endkassette 8 abgelegt werden sollen.

Weiterhin ist in dem Geldautomaten 1 eine Steuerungseinrichtung 11 integriert, die u.a. mit dem Vereinzeler 5 und der Prüfeinrichtung 6 verbunden ist, um den Vereinzelungsvorgang zu steuern, die Sensorergebnisse der Prüfeinrichtung 6 auszuwerten und in Abhängigkeit davon die Banknoten 4 entweder in die Kassette 8 oder das Rückgabefach 9 ein- bzw. auszugeben.

Der Geldautomat 1 ist insbesondere dadurch ausgezeichnet, daß die Kassette 8 mittels einer Funkverbindung kontaktlos von der Steuerungseinrichtung 11 aus geöffnet und/oder geschlossen werden kann.

Hierzu umfaßt die Steuerungseinrichtung 11 eine Sendeeinheit 12 und die Kassette 8 eine im / oder am Gehäuse außen angebrachte Empfangseinheit 13. Besonders bevorzugt werden die beiden Komponenten 12, 13 zur Herstellung einer Funkverbindung nach dem "Bluetooth" -Standard ausgelegt sein. In der Empfangseinheit 13 integriert oder alternativ dazu auch in einem separat in der Kassette 8 enthaltenen Bauteil wird zudem eine weitere Steuerungseinrichtung vorhanden sein, um in Abhängigkeit von den per Funk übermittelten Signalen der Steuerungsrichtung 11,12 mittels einer z. B. elektromechanischen Vorrichtung den Deckel 14 der Kassette 8, durch den Banknoten in die Kassette 8 eingegeben werden, zu öffnen oder zu schließen. Zudem weist die Kassette bevorzugt ein verriegelbares Verschlußelement auf, um den Deckel 14 im geschlossenen Zustand zu verriegeln.

Es sei angemerkt, daß im Sinne der vorliegenden Erfindung unter dem Öffnen einer Kassette ein Entriegeln des geschlossenen Verschlußelementes, d.h. in diesem Fall des Deckels und/oder ein Öffnen des Verschlußelementes und unter dem Schließen einer Kassette ein Verschließen des Verschlußelementes und/oder ein Verriegeln des geschlossenen Verschlußelementes verstanden wird.

Weiterhin ist in der Kassette 8 eine Speichereinheit integriert, in der Daten über den Inhalt der Kassette 8, wie z. B. über die Anzahl und den Zustand an eingegebenen Banknoten 4 pro Stückelung bzw. über die Zuordnung dieser Banknoten 4 zu bestimmten Transaktionen gespeichert werden.

Zur Durchführung des erfindungsgemäßen Verfahrens nach einem ersten Ausführungsbeispiel wird die Vorrichtung nach der Figur 1 wie folgt verwendet:

Zu Beginn einer Transaktion, d.h. eines Einzahlungsvorganges, wird eine Bedienperson die einzuzahlenden Banknoten 4 in das Eingabefach 3 eingeben. Automatisch veranlaßt oder nach einem von der Bedienperson eingegebenen Signal werden die eingegebenen Banknoten 4 mittels der Einzugsrollen 5 vereinzelt eingezogen und über die Transporteinrichtung 6 durch die Prüfeinrichtung 6 transportiert, in der u.a. ihre Echtheit überprüft und ihre Stückelung bestimmt wird. In Abhängigkeit von den Ergebnissen der Überprüfung werden die nicht akzeptierten Banknoten 4 ins Rückgabefach 9 ausgegeben und die anderen Banknoten 4 in der Kassette 8 abgelegt.

Spätestens unmittelbar vor der Eingabe von Banknoten 4 in die Endkassette 8 wird hierbei der Deckel 14 der Kassette 8 über ein von der Sendeeinheit 12 der Steuerungseinrichtung 11 per Funk ausgesendetes und von Empfangseinheit 13 der Kassette 8 empfangenes Signal entriegelt und geöffnet.

Entweder nach jedem Einzahlungsvorgang oder zumindest dann, wenn die Kassette 8 aus dem Geldautomaten 1 entnommen werden soll, weil sie z.B. voll ist, wird die Kassette 8 wiederum mittels der Funkverbindung zwischen Sendeeinheit 12 und Empfangseinheit 13 kontaktlos per Funk angesteuert. Hierbei werden ihr sowohl Daten über den Inhalt der Kassette, wie z. B. über die Anzahl und den Zustand an Banknoten pro Stückelung bzw. der Zuordnung dieser Banknoten zu bestimmten Transaktionen, als auch ein Signal übermittelt, welches veranlaßt, daß der Deckel 14 automatisch verschlossen und verriegelt wird und die Kassette 8 zur Weiterverarbeitung entnommen werden kann.

Eine solche Weiterverarbeitung kann z.B. darin bestehen, daß in einer Bankzentrale die mit Banknoten gefüllten Kassetten von mehreren Filialen angeliefert, die Banknöten entnommen und die jeweils von einem Kunden eingezahlten Beträge auf dessen Konto gutgeschrieben werden.

Ein solcher Vorgang unter Verwendung eines zweiten Ausführungsbeispiels einer erfindungsgemäßen Kassette und Steuerungseinheit wird nachfolgend anhand der Figur 2 erläutert.

In dem Raum 18 der Bankzentrale sollen mehrere mit Banknoten gefüllte Kassetten 8', von denen in der Figur 2 exemplarisch fünf dargestellt sind, von der Bedienperson 15 entleert und weiterbearbeitet werden.

Die Kassetten 8' sind dabei insbesondere durch die Funkeinheit 13' ausgezeichnet, die sowohl zum Senden, als auch zum Empfangen von Funksignalen ausgelegt ist. Die Steuerungseinrichtung zur kontaktlosen Funksteuerung der Kassetten 8' ist in diesem Fall ein Mobiltelefon 11' mit Sende- und Empfangseinheit 12'. Die Verbindung zwischen Mobiltelefon 11' und Funkeinheit 13' erfolgt bevorzugt durch eine Verbindung nach dem "Bluetooth"-Standard.

Die Verwendung eines solchen Funksystems, bei dem auch mehrere Teilnehmer im Funkverbindungskreis enthalten sein können, bietet bei der Verarbeitung von mehreren Kassetten 8' den besonderen Vorteil, daß mittels des Mobiltelefons 11' von der Bedienperson 15 auch die Deckel 14 von all den Kassetten 8' gleichzeitig geöffnet werden können, die sich in der Reichweite der Funkverbindung befinden und/oder deren Öffnungs-, bzw. Schließcode dem Mobiltelefon 11' bekannt ist.

Weiterhin ist das Mobiltelefon 11' der Bedienperson 15 über eine zusätzliche Funk- bzw. Mobiltelefonverbindung mit einer externen Kontrolleinrichtung 16 mit Funkeinheit 17 verbunden. Diese Kontrolleinheit 16 kann sich entweder im gleichen Raum 18 wie die Bedienperson 15 und die Kassetten 8' oder auch an einem anderen Ort befinden, von dem aus das Öffnen der Kassetten bzw. Werstellen der Kassetteninhalte zentral koordiniert und überwacht wird.

Das System nach der Figur 2 kann zur Durchführung eines zweiten Ausführungsbeispiels des erfindungsgemäßen Verfahrens beispielhaft wie folgt verwendet werden:

In den Raum 18, in den sich die Bedienperson 15 befindet, werden die Kassetten 8' von mehreren Filialen der Bankzentrale zur Wertstellung angeliefert. Die Bedienperson wird sich dabei z.B. durch eine PIN-Code Eingabe in das Mobiltelefon 11' oder mit Hilfe eines im Mobiltelefon 11' integrierten biometrischen Sensors, wie einem Fingerabrucksensor, identifizieren.

Mittels der Funkeinheit 13'werden nun Daten über zur Identifizierung und den Inhalt der Kassetten 8' per Funk an das Mobiltelefon 11' übertragen. Diese Daten werden anschließend an die Kontrolleinheit 16 durch eine Funk- bzw. Telefonverbindung von Mobiltelefon 11' zu Funkeinheit 17 übermittelt, um die eingezahlten Beträge den jeweiligen Kunden gutzuschreiben.

Die Datenübermittlung von der Funkeinheit 13' zum Mobiltelefon 11' und weiter zur Kontrolleinheit 16 kann dabei entweder automatisch erfolgen, wenn die Kassetten in die Bluetooth-Funkreichweite des Mobiltelefons 11' gelangen, oder z.B. durch die Bedienperson 15 mittels des Mobiltelefons 11' veranlaßt.

Sofern die Bedienperson 15 zur Öffnung derjenigen Kassetten 8' berechtigt ist, die auf die vorgenannte Weise identifiziert wurden, empfängt das Mobiltelefon 11' von der Kontrolleinrichtung 16 Signale, die es ermöglichen, daß diese Kassetten 8' über die Bluetooth-Funkverbindung zwischen dem Mobilfunktelefon 11' und der Funkeinheit 13'geöffnet werden können. Nach dem Öffnen der Kassetten 8' entnimmt die Bedienperson 15 die enthaltenen Banknoten und führt sie einer Weiterverarbeitung zu.

Neben den vorhergehend beschriebenen Ausführungsbeispielen sind selbstverständlich noch zahlreiche Alternativen oder Variationen denkbar.

Während vorstehend der Fall beschrieben wurde, daß die Verifizierung der Berechtigung des Mobiltelefons 11' als Steuerungseinrichtung 11,11' bzw. der zugehörigen Bedienperson 15 zum Öffnen bestimmter Kassetten 8, 8' durch einen Datentransfer zwischen dem Mobiltelefon 11' und einer externen Kontrolleinrichtung 16 erfolgt, ist auch denkbar, daß diese Verifizierung zwischen Steuerungseinrichtung 11,11' und der Kassette 8, 8' selbst erfolgt.

So könnte beispielsweise in einem Speicher in der Kassette 8, 8' ein Verifizierungssystem vorhanden sein, das nur auf ein für eine einzelne Steuerungseinrichtung 11,11' bzw. eine Gruppe von Steuerungseinrichtungen 11,11' spezifisches Funksignal eine Öffnung des Kassettendeckels 14 erlaubt.

Weiterhin sei angemerkt, daß die Übertragung von Daten per Funk in allen vorgenannten Fällen besonders bevorzugt in verschlüsselter Form erfolgt, um eine Verfälschung der Signale, insbesondere auch über die Art und den Inhalt der zu leerenden Kassetten zu verhindern.

Während die vorstehend genannte Kassette 8 nach dem ersten Ausführungsbeispiel ausschließlich zur Aufnahme von eingezahlten Banknoten 4 ausgelegt ist, ist auch der Fall denkbar, daß entweder dieselbe Kassette 8 in dem Geldautomaten 1 oder eine weitere Kassette auch zur Auszahlung von Banknoten 4 an die Bedienperson dient.

In diesem Fall würde die Funkverbindung zwischen Steuerungseinrichtung 11 und der Kassette dazu verwendet werden, den Deckel der Kassette dann zu schließen, wenn die Kassette entnommen werden soll, weil beispielsweise keine Banknoten oder nur eine minimal vorgegebene Anzahl von Banknoten noch in der Kassette enthalten ist. Zudem werden in diesem Fall über die Funkverbindung bei einem Einsetzen der Kassette in den Geldautomaten 1 Daten über die Art und den Inhalt der Kassette zu der Steuerungseinrichtung 11 per Funk übertragen.

In diesem Zusammenhang ist es nicht nur vorstellbar, daß die Kassetten 8, 8' mittels der Funkanbindung dann automatisch geschlossen wird, bevor sie aus dem Geldautomaten, z.B. nach der Figur 1, entnommen wird, sondern auch in dem Fall, daß sie z.B. aus dem Raumbereich 18 oder dem Funkverbindungsbereich zwischen Kassette 8' und Mobiltelefon 11' wieder entfernt wird.

Schließlich sei betont, daß die Steuerungseinrichtung 11, 11' zur kontaktlosen Funksteuerung der Kassetten 8, 8' nicht nur ein Mobiltelefon 11,11', sondern auch eine andere, z.B. mobile Einheit sein kann, die mit einer Möglichkeit zur Herstellung einer Funkverbindung ausgerüstet ist.

Wie vorstehend erwähnt wurde, erlaubt die erfindungsgemäße Verwendung einer Funkverbindung zum Öffnen und Schließen der Kassetten unter anderem, daß in größeren Mengen angelieferte Kassetten in kürzerer Zeit als bei den bekannten Systemen verarbeitet werden können, bei denen die einzelnen Kassetten jeweils nacheinander in ein Andockgehäuse positioniert werden müssen. Wenn zudem ein Funksystem, wie z.B. der "Bluetooth"-Standard verwendet wird, können auch mehrere Kassetten gleichzeitig und automatisch geöffnet werden, wodurch die Verarbeitungszeit weiter vermindert wird.

## Patentansprüche

1. Verfahren zum Öffnen und/oder Schließen einer Kassette (8, 8') zur Aufnahme von Wertgegenständen (4), wie z.B. Wertscheinen oder Münzen, **dadurch gekennzeichnet, daß** die Kassette (8, 8') mittels einer Funkverbindung zwischen der Kassette (8, 8') und einer Steuerungseinrichtung (11, 11') kontaktlos geöffnet und/oder geschlossen wird.

2. Verfahren nach Anspruch 1, **dadurch gekennzeichnet, daß** die Kassette (8, 8') mittels einer stationären (12) oder mobilen (12') Sendeeinheit (12, 12') der Steuerungseinrichtung (11, 11') per Funk kontaktlos geöffnet und/oder geschlossen wird.

3. Verfahren nach einem der vorherigen Ansprüche, **dadurch gekennzeichnet, daß** die Steuerungseinrichtung (11, 11') mehrere, an unterschiedlichen Positionen in einem Raumbereich (18) vorhandene Kassetten (8, 8') öffnet und/oder schließt.

4. Verfahren nach einem der vorherigen Ansprüche, **dadurch gekennzeichnet, daß** der Öffnungs- und/oder Schließvorgang nach einem Verifizierungsvorgang zur Bestätigung der Berechtigung der Steuerungseinrichtung (11, 11') zu Öffnungs-und/oder Schließvorgängen bei der jeweiligen Kassette (8, 8') erfolgt.

5. Verfahren nach Anspruch 4, **dadurch gekennzeichnet, daß** mittels der Funkverbindung zwischen Kassette (8, 8') und Steuerungseinrichtung (11, 11') oder auf einer von der Funkverbindung zwischen Kassette (8, 8') und Steuerungseinrichtung (11,11') unabhängige Weise Daten zur Verifizierung übertragen werden.

6. Verfahren nach einem der vorherigen Ansprüche, **dadurch gekennzeichnet, daß** über die Funkverbindung zwischen Kassette (8, 8') und Steuerungseinrichtung (11,11') oder auf einer von der Funkverbindung zwischen Kassette (8, 8') und Steuerungseinrichtung (11, 11') unabhängige Weise Daten über die Art und/oder den Inhalt der Kassette (8, 8') übertragen werden.

7. Verfahren nach einem der vorherigen Ansprüche, **dadurch gekennzeichnet, daß** die Kassette (8, 8') in einem Geldautomaten (1) zur Ausgabe und/oder Aufnahme von Wertscheinen (4) und/oder Münzen verwendet wird und die Kassette (8, 8') dann automatisch im Geldautomat (1) geschlossen wird, nachdem zumindest ein vorgegebenes Kriterium, wie z.B. eine Vorgabe eines Füllstandes der Kassette (8, 8') mit Wertscheinen (4) und/oder Münzen, erfüllt wurde.

8. Verfahren nach einem der vorherigen Ansprüche, **dadurch gekennzeichnet, daß** die Kassette (8, 8') ein verriegelbares Verschlußelement (14), wie z.B. einen Deckel (14) umfaßt und der Schritt des Schließens der Kassette (8, 8') ein Verschließen des Verschlußelementes (14) und/oder ein Verriegeln des geschlossenen Verschlußelementes (14) und der Schritt des Öffnens der Kassette ein Entriegeln des geschlossenen Verschlußelementes (14) und/oder ein Öffnen des Verschlußelementes (14) umfaßt.

9. Kassette (8, 8') zur Aufnahme von Wertgegenständen (4), wie z.B. Wertscheinen oder Münzen, **dadurch gekennzeichnet, daß** die Kassette (8, 8') eine Einrichtung (13, 13') zur Herstellung einer Funkverbindung zwischen der Kassette (8, 8') und einer externen Steuerungseinrichtung (11,11') umfaßt, um die Kassette (8, 8') kontaktlos per Funk öffnen und/oder schließen zu können.

10. Kassette nach Anspruch 9, **dadurch gekennzeichnet, daß** die Kassette (8, 8') eine Sendeeinheit (13,13') zur kontaktlosen Aussendung per Funk von Daten über die Art und/oder den Inhalt der Kassette (8, 8') umfaßt.

11. Kassette nach einem der Ansprüche 9 oder 10, **dadurch gekennzeichnet, daß** die Kassette (8, 8') eine Kontrolleinrichtung umfaßt oder die Kassette (8, 8') mit einer externen Kontrolleinrichtung (16) verbindbar ist, welche Öffnungs- und/oder Schließvorgänge der jeweiligen Kassette (8, 8') nur nach einem Verifizierungsvorgang zur Bestätigung der Berechtigung der Steuerungseinrichtung (11, 11') zu Öffnungs-und/oder Schließvorgängen freigibt.

12. Kassette nach Anspruch 11, **dadurch gekennzeichnet, daß** die Kontrolleinrichtung (16) mittels der Funkverbindung zwischen Kassette (8, 8') und Steuerungseinrichtung (11, 11') oder auf einer von der Funkverbindung zwischen Kassette (8, 8') und Steuerungseinrichtung (11, 11') unabhängige Weise mit der Steuerungseinrichtung (11, 11') verbindbar ist, um Daten zur Verifizierung empfangen oder senden zu können.

13. Steuerungseinrichtung (11, 11') für eine Kassette (8, 8') zur Aufnahme von Wertgegenständen (4), wie z.B. Wertscheinen oder Münzen, **dadurch gekennzeichnet, daß** die Steuerungseinheit (11,11') per Funk mit der Kassette (8, 8') verbindbar ist, um die Kassette (8, 8') kontaktlos per Funk öffnen und/oder schließen zu können.

14. Steuerungseinrichtung nach Anspruch 13, **dadurch gekennzeichnet, daß** die Steuerungseinrichtung (11,11') eine stationäre (12) oder mobile (12') Sendeeinheit (12,12') umfaßt, um die Kassette (8, 8') per Funk kontaktlos öffnen und/oder schließen zu können.

15. Steuerungseinrichtung nach Anspruch 13 oder 14, **dadurch gekennzeichnet, daß** die Steuerungseinrichtung (11,11') zum Schießen und/ oder Öffnen von mehreren, an unterschiedlichen Positionen in einem Raumbereich (18) vorhandenen Kassetten (8, 8') ausgestaltet ist.

16. Steuerungseinrichtung nach einem der Ansprüche 13 bis 15, **dadurch gekennzeichnet, daß** die Steuerungseinrichtung (11,11') eine Empfangseinheit (12,12') zum kontaktlosen Empfang von per Funk ausgesendeten Daten über die Art und/oder den Inhalt der Kassette (8, 8') umfaßt.

17. Steuerungseinrichtung nach einem der Ansprüche 13 bis 16, **dadurch gekennzeichnet, daß** die Steuerungseinheit (11,11') mit einer Kontrolleinrichtung (16) verbindbar ist, wobei die Steuerungseinrichtung (11,11') zur Übermittlung von Daten an die Kontolleinrichtung (16) und/oder zum Empfang von Daten von der Kontolleinrichtung (16) zur Verifizierung der Berechtigung der Steuerungseinrichtung (11,11') zu Öffnungs-und/oder Schließvorgängen ausgelegt ist.

18. Steuerungseinrichtung nach Anspruch 17, **dadurch gekennzeichnet, daß** die Steuerungseinrichtung (11,11') mittels der Funkverbindung zwischen Kassette (8, 8') und Steuerungseinrichtung (11,11') oder auf einer von der Funkverbindung zwischen Kassette (8, 8') und Steuerungseinrichtung (11, 11') unabhängige Weise mit der Kontrolleinrichtung (16) verbindbar ist, um Daten zur Verifizierung an die Kontrolleinrichtung (16) zu senden und/oder zu empfangen.

19. Geldautomat (1) zur Ausgabe aus und/oder Aufnahme von Wertscheinen (4) und/oder Münzen in einer Kassette (8, 8') mit einer Steuerungseinrichtung (11) zur Ansteuerung der Kassette (8, 8'), **gekennzeichnet durch** eine Einrichtung (12) zur Herstellung einer Funkverbindung zwischen Kassette (8, 8') und Steuerungseinrichtung (11), um die Kassette (8, 8') kontaktlos per Funk öffnen und/oder schließen zu können.

20. Geldautomat nach Anspruch 19, **dadurch gekennzeichnet, daß** die Kassette (8, 8') dann automatisch im Geldautomat (1) geschlossen wird, nachdem zumindest ein vorgegebenes Kriterium, wie z.B. eine Vorgabe eines Füllstandes der Kassette (8, 8') mit Wertscheinen (4) und/oder Münzen, erfüllt wurde.
